# EUROPÄISCHE PATENTSCHRIFT

(11) **EP 0 466 844 B1**
(45) Veröffentlichungstag und Bekanntmachung des Hinweises auf die Patenterteilung: **18.05.1994**
(21) Anmeldenummer: 90916731.4
(22) Anmeldetag: 16.11.1990
(51) Int. Cl.: F16J 1/00, F16D 65/16, B21K 1/18, B23P 15/10

(54) **KALTVERFORMTER KOLBEN FÜR HYDRAULISCH ARBEITENDE BREMSE**
COLD-FORMED PISTON FOR HYDRAULICALLY OPERATED BRAKE
PISTON FORME A FROID POUR FREINS HYDRAULIQUES

(30) Priorität: 08.02.1990 DE 4003731
(43) Veröffentlichungstag der Anmeldung: 22.01.1992
(73) Patentinhaber: ITT Automotive Europe GmbH, 60488 Frankfurt (DE)
(72) Erfinder: WEILER, Rolf, D-6239 Eppstein 2 (DE)
(86) Internationale Anmeldenummer: EP9001959
(87) Internationale Veröffentlichungsnummer: WO9112445

(56) Entgegenhaltungen:
- EP-A- 0 304 103
- DE-B- 1 750 662
- US-A- 4 193 179

## Beschreibung

Zur Betätigung von hydraulisch arbeitenden Bremsen werden Kolben benötigt, welche auf die Trägerplatte von Bremsklötzen einwirken. Derartige Kolben werden regelmäßig gegossen. Zur Verbilligung der Herstellung derartiger Kolben, die in großen Stückzahlen benötigt werden, hat man vorgeschlagen, diese durch spanloses Verformen des festen Materials, beispielsweise durch Fließpreßverfahren oder hydromechanische Umformung herzustellen. Hierzu ist beispielsweise die EP-OS 304 103 bekannt geworden. Werden derartige, eine verhältnismäßig dünne Wandstärke aufweisende Kolben am Kolbenboden mit den zum Abbremsen größerer Fahrzeuge erheblichen hydraulischen Kräften beaufschlagt, so kann es durchaus geschehen, daß die Wandfläche des Kolbens in radialer Richtung verformt wird. Hieraus können sich Schwierigkeiten hinsichtlich der Abdichtung des Kolbens oder seiner Führung innerhalb des Zylinders ergeben.

Die Erfindung geht daher aus von einem Kolben der sich aus dem Oberbegriff des Hauptanspruchs ergebenden Gattung und hat sich zur Aufgabe gestellt, einen derartigen Kolben hinsichtlich seiner Belastungsfähigkeit zu verbessern bzw. bei ausreichender Belastungsfähigkeit ihn hinsichtlich seines Gewichtes zu vermindern.

Die gestellte Aufgabe wird für den Kolben der gattungsgemäßen Art durch die sich aus dem kennzeichnenden Teil des Hauptanspruchs ergebende Merkmalskombination gelöst. Die Erfindung besteht im Prinzip also darin, den Kolben durch gezielte Verformungen belastungsfähiger gegenüber axial gerichteten Kräften zu machen.

In vielen Fällen empfiehlt es sich in Weiterbildung der Erfindung, den Kolben in den gegenüber Verformung kritischen Bereichen zu sätzlich zu verstärken. Dies geschieht vorzugsweise unter Anwendung der sich aus Anspruch 2 ergebenden Merkmalskombination.

Die umlaufende Nut ist in Weiterbildung der Erfindung zweckmäßigerweise in der sich aus Anspruch 3 ergebenden Form eingebracht. Vielfach kann es sich auch empfehlen, gemäß Anspruch 4 mehrere nebeneinander liegende Nuten vorzusehen.

In Weiterbildung der Erfindung empfiehlt es sich, die gemäß der Erfindung vorgesehenen Nuten sowie die hierdurch bedingten Konsolen mehrfach auszunutzen. Dies kann gemäß den sich aus den Ansprüchen 6 bis 8 ergebenden Maßnahmen durch gleichzeitige Aufnahme des einen Endes der Schutzmanschette in der Nut und/oder durch Aufnahme des Dichtgummis sowie durch Ausnutzen der Konsole zur Verankerung einer Belaghaltefeder geschehen.

Um eine Verformung des Kolbens herabzusetzen, empfiehlt sich in Weiterbildung der Erfindung eine Merkmalskombination gemäß Anspruch 9, bei der der Boden des Kolbens schon in der Richtung der axial wirkenden Angriffskraft verformt ist.

Ein Ausführungsbeispiel der Erfindung wird nachfolgend anhand der Zeichnung erläutert. Darin zeigt
- Fig. 1: in geschnittener Dartstellung einen erfindungsgemäßen Kolben und
- Fig. 2: in verkleinerter, nicht geschnittener Darstellung den Kolben nach Fig. 1.

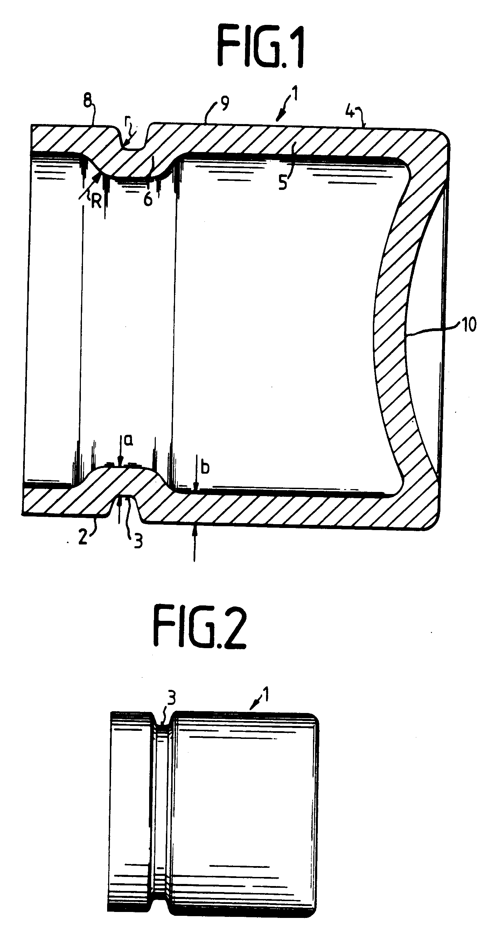

Der Kolben 1 in Fig. 1 ist im wesentlichen ein Hohlzylinder mit einer Kolbenwand 5 und einem Kolbenboden 10. Die hydraulischen Kräfte der Bremse greifen an dem Kolbenboden 10 an, der sich daraufhin bei der in Fig. 1 gezeigten Lage nach links bewegt und mit seinem in Fig. 1 linkem offenem Ende an einer Trägerplatte eines Bremsklotzes angreift. Die Kolbenwand 5 besitzt eine Wandstärke b, die relativ gering ist. Greift nun eine hydraulische Kraft am Kolbenboden 10 an, so kann es dazu führen, daß die Kolbenwand 5 in einem in Fig. 1 beispielsweise zwischen 8 und 9 liegenden kritischen Bereich 2 verformt wird, indem in diesen Bereich die Zylinderwand 5 beispielsweise nach außen gewölbt wird. Hierdurch können sich Probleme hinsichtlich der Führung des Zylinders im Kolben ergeben, der möglicherweise verklemmt wird oder auch bei einer Bewegung der Kolbenwand nach innen Dichtprobleme. Der Kolben selbst kann durch Fließpressen oder durch Tiefziehen hergestellt sein und besitzt hierdurch die weiter oben schon geschilderte relativ dünne gewichtssparende Wandstärke.

Um nun die zuletzt geschilderten Schwierigkeiten zu beseitigen, ist in die Außenwand 4 innerhalb des kritischen Bereiches 2 eine umlaufende Nut 3 eingeformt, und zwar derart, daß sich eine in den Innenraum weisende Konsole 6 an der Innenwand des Kolbens 1 bildet. Diese umlaufende Nut führt zu einer Versteifung des Kolbens. Dabei ist zu beachten, daß die vorzugsweise durch Rollieren gewonnene Nut nicht zu einer Schwächung der Wandstärke a innerhalb des kritischen Bereiches 2 führt, sondern die Wandstärke eher noch durch eine entsprechende Formgebung des benutzten Werkzeuges verstärkt wird, so daß die Wandstärke a im kritischen Bereich 2 mindestens so stark wie die Wandstärke b des verbleibenden Teils des Kolbens ist. Die Wandstärke sollte dabei senkrecht zu der Erstreckungsrichtung der Kolbenwand 5 gemessen werden. Dementsprechend ist auch der Radius R der Konsole 6 mindestens um den Betrag b größer als der Radius r am Boden der umlaufenden Nut 3.

Die aus Festigkeitsgründen vorgesehene Nut kann gleichzeitig mehrfach ausgenutzt werden, indem beispielsweise in Abhängigkeit von der Lage des kritischen Bereichs 2 entweder das eine Ende der Schutzmanschette oder auch die Gummidichtung gegenüber dem zugehörigen Zylinder in der Nut 3 verankert wird. Wahlweise oder zusätzlich kann auch die Konsole 6 dazu ausgenutzt weden, daß die Federbeine einer an der Rückseite der Belagträgerplatte befestigten Haltefeder hinter die Konsole 6 greifen und somit den Bremsklotz gegenüber dem Kolben 1 rastend halten.

Die konvexe Ausgestaltung des Kolbenbodens 10 unterstützt zusätzlich die Vermeidung einer Deformation der Kolbenaußenwand 5 bei großen auf den Kolbenboden 10 einwirkenden Kräften. Die Kurvenform ist vorzugsweise parabelförmig.

Fig. 2 zeigt in verkleinerter und nicht geschnittener Form den Kolben nach Fig. 1 in Seitenansicht.

## Patentansprüche

1. Kolben (1) für eine hydraulisch betätigte Bremse, wobei der durch ein Preßverfahren insbesondere Tiefziehverfahren gebildete Kolben in seinem den zu betätigten Bremsbelag zugewandten Endbereich (2) mit einer umlaufenden Nut (3) in der Mantelfläche (4) versehen ist, dadurch **gekennzeichnet,** daß die Nut durch Einpressen derart in die Kolbenwand (5) eingeformt ist, daß die Wandstärke (a) des Kolbens in Höhe der Nut (3) nicht gegenüber der übrigen Wandstärke (5) geschwächt wird.

2. Kolben nach Anspruch 1, dadurch **gekennzeichnet,** daß der Krümmungsradius (R), der unterhalb der Nut in dem Kolbeninnenraum ragenden umlaufenden Konsole (6) mindestens um die Wandstärke (a) größer ist als der Krümmungsradius (r) am Boden der Nut (3).

3. Kolben nach Anspruch 1 oder 2, dadurch **gekennzeichnet,** daß die umlaufende Nut (3) innerhalb eines umlaufenden Bereichs (8 bis 9) durch Rollieren eingeformt ist, der aufgrund von auf den Kolbenboden (10) wirkenden hydraulischen Kräften zum Ausbeulen, vorzugsweise nach außen neigt.

4. Kolben nach einem der Ansprüche 1 bis 3, dadurch **gekennzeichnet,** daß mehrere im Abstand zueinander parallel umlaufende Nuten (3) vorgesehen sind.

5. Kolben nach einem der Ansprüche 1 bis 4, dadurch **gekennzeichnet,** daß die Nut (3) in an sich bekannter Weise zur kolbenseitigen Befestigung einer Schutzmanschette dient.

6. Kolben nach einem der Ansprüche 1 bis 5, dadurch **gekennzeichnet,** daß die Nut (3) zur Aufnahme der gegenuber der zugeordneten Zylinderwand wirksamen Gummidichtung dient.

7. Kolben nach einem der Ansprüche 1 bis 6, dadurch **gekennzeichnet,** daß er zur Verankerung von an sich in bekannter Weise in den Kolbeninnenraum ragenden Federbeinen einer Belaghaltefeder dient, deren Enden die Konsole (6) hintergreifen.

8. Kolben nach einem oder mehreren der Ansprüche 5 bis 7, dadurch **gekennzeichnet,** daß der einer einzigen Nut (3) zugeordnete Wandbereich gleichzeitig zur Aufnahme der Schutzmanschette und/oder der Gummidichtung sowie zur Verankerung der Belaghaltefeder dient.

9. Kolben nach einem oder mehreren der Ansprüche 1 bis 8, dadurch **gekennzeichnet,** daß der Kolbenboden (10) konvex ins Kolbeninnere weisend ausgestaltet ist.

## Claims

1. A piston (1) for a hydraulically actuated brake, the said piston which is realized by a pressing process, in particular by a deep-drawing process, being provided in its end range (2) facing the brake pad to be actuated with a circumferential groove (3) in the peripheral surface (4),
**characterized** in that the groove is formed in the piston wall (5) by pressing in such that the wall thickness (a) of the piston is not weakened at the level of the groove (3) in respect of the remaining wall thickness (5).

2. A piston as claimed in claim 1,
**characterized** in that the radius of curvature (R) of the circumferential bracket (6) which projects into the interior space of the piston below the groove is larger at least by the wall thickness (a) than the radius of curvature (r) at the bottom of the groove (3).

3. A piston as claimed in claim 1 or claim 2,
**characterized** in that the circumferential groove (3) is formed by roller-burnishing within a circumferential range (8 to 9) which tends to bulge preferably outwardly on account of hydraulic forces acting on the piston bottom (10).

4. A piston as claimed in anyone of the claims 1 to 3,
**characterized** in that a plurality of circumferential grooves (3) in a parallel spaced relationship to each other is provided.

5. A piston as claimed in anyone of the claims 1 to 4,
**characterized** in that the groove (3) serves in state-of-the-art manner for the piston-side fixing of a protective cup.

6. A piston as claimed in anyone of the claims 1 to 5,
**characterized** in that the groove (3) serves to accommodate the rubber seal which is active in respect of the associated cylinder wall.

7. A piston as claimed in anyone of the claims 1 to 6,
**characterized** in that it serves to secure spring legs projecting in state-of-the-art manner into the interior space of the piston and making part of a pad retaining spring whose ends make catch behind the bracket (6).

8. A piston as claimed in anyone of the claims 5 to 7,
**characterized** in that the wall range associated with one single groove (3) serves simultaneously to accommodate the protective cup and/or the rubber seal and to secure the pad retaining spring.

9. A piston as claimed in anyone or more of claims 1 to 8,
**characterized** in that the piston bottom (10) is of convex configuration pointing into the interior space of the piston.

## Revendications

1. Piston (1) pour frein à actionnement hydraulique, dans lequel le piston, réalisé par un procédé à la presse, notamment un procédé d'emboutissage, est pourvu, dans sa zone extrême (2) tournée vers la plaquette de frein à actionner, d'une gorge annulaire (3) ménagée dans sa surface cylindrique (4), caractérisé en ce que la gorge est réalisée au formage, par une action de repoussage, dans la paroi de piston (5), de telle sorte qu'au niveau de la gorge (3), l'épaisseur de paroi (a) du piston ne soit pas affaiblie vis-à-vis de l'épaisseur du reste de la paroi (5).

2. Piston suivant la revendication 1, caractérisé en ce que le rayon de courbure (R) de la partie en saillie annulaire (6) qui fait saillie au-dessous de la gorge dans la cavité intérieure du piston est supérieur au moins de l'épaisseur de paroi (a) au rayon de courbure (r) au fond de la gorge (3).

3. Piston suivant l'une des revendications 1 et 2, caractérisé en ce que la gorge annulaire (3) est réalisée au formage, par calandrage, à l'intérieur d'une zone annulaire (8 à 9) qui, sous l'effet d'efforts hydrauliques s'exerçant sur le fond de piston (10), offre une tendance au bombement, de préférence vers l'extérieur.

4. Piston suivant l'une des revendications 1 à 3, caractérisé en ce qu'il est prévu plusieurs gorges annulaires (3) parallèles entre elles à distance l'une de l'autre.

5. Piston suivant l'une des revendications 1 à 4, caractérisé en ce que, d'une manière en soi connue, la gorge (3) sert à la fixation, du côté du piston, d'une manchette de protection.

6. Piston suivant l'une des revendications 1 à 5, caractérisé en ce que la gorge (3) sert à recevoir la garniture en caoutchouc assurant l'étanchéité vis-à-vis de la paroi associée du cylindre.

7. Piston suivant l'une des revendications 1 à 6, caractérisé en ce qu'il sert à l'ancrage de branches d'un ressort de maintien de garniture qui font saillie, d'une manière en soi connue, dans la cavité intérieure du piston et dont les extrémités s'accrochent derrière la partie en saillie (6).

8. Piston suivant une ou plusieurs des revendications 5 à 7, caractérisé en ce que la zone de la paroi qui est associée à une gorge (3) unique sert en même temps à recevoir la manchette de protection et/ou la garniture d'étanchéité en caoutchouc, ainsi qu'à l'ancrage du ressort de maintien de garniture.

9. Piston suivant une ou plusieurs des revendications 1 à 8, caractérisé en ce que le fond de piston (10) a une forme convexe dirigée vers l'intérieur du piston.
